Europäisches Patentamt

**European Patent Office**

**Office européen des brevets**

(11) Numéro de publication: **0 404 637**
**A1**

# (12) DEMANDE DE BREVET EUROPEEN

(21) Numéro de dépôt: **90401624.3**

(22) Date de dépôt: **12.06.90**

(51) Int. Cl.⁵: **F28F 11/02**

(30) Priorité: **23.06.89 FR 8908412**
**29.09.89 FR 8912790**

(43) Date de publication de la demande:
**27.12.90 Bulletin 90/52**

(84) Etats contractants désignés:
**BE CH ES LI SE**

(71) Demandeur: **FRAMATOME**
**Tour Fiat 1, Place de la Coupole**
**F-92400 Courbevoie(FR)**

(72) Inventeur: **Lenoble, Richard**
**108 rue Hénon**
**F-69004 Lyon(FR)**
Inventeur: **Billoue, Jean-Paul**
**34 rue de la Garenne**
**F-78130 Chapet les Mureaux(FR)**

(74) Mandataire: **Bouget, Lucien et al**
**Cabinet Lavoix 2, Place d'Estienne d'Orves**
**F-75441 Paris Cédex 09(FR)**

(54) **Dispositif d'obturation et de retenue d'un bouchon de fermeture étanche d'un tube de générateur de vapeur.**

(57) Le dispositif comporte une tige filetée (11a) susceptible d'être vissée dans l'alésage taraudé (10') traversant le noyau (10) et solidaire, à l'une de ses extrémités, d'un élément de blocage (11b) dont le diamètre extérieur est supérieur au diamètre de la tige (11a), destiné à venir s'engager dans l'extrémité (7) de l'enveloppe (4) du bouchon (3) opposée au fond de fermeture (5) du bouchon, lorsque la tige filetée (11a) est vissée dans le noyau (10). L'élément de blocage (11b) est muni de moyens (13) coopérant avec l'extrémité de l'enveloppe (4) du bouchon pour réaliser le blocage en rotation et/ou en translation du dispositif d'obturation (11). La tige filetée (11a) peut comporter une ouverture transversale dans laquelle est engagée une pièce de freinage.

FIG. 2

L'invention concerne un dispositif d'obturation et de retenue d'un bouchon de fermeture étanche d'un tube de générateur de vapeur, en particulier d'un générateur de vapeur d'un réacteur nucléaire à eau sous pression.

Les générateurs de vapeur des réacteurs nucléaires à eau sous pression comportent une enveloppe de forme générale cylindrique à l'intérieur de laquelle une boîte à eau est délimitée par une plaque tubulaire de forte épaisseur sur laquelle est fixé le faisceau de tubes du générateur de vapeur. Chacun des tubes du faisceau comporte deux branches rectilignes parallèles dont les parties d'extrémité sont fixées à l'intérieur de la plaque tubulaire généralement par dudgeonnage et par soudage.

Dans le générateur de vapeur en service, les tubes sont en contact à la fois avec le fluide primaire du réacteur nucléaire constitué par de l'eau sous pression et avec le fluide secondaire constitué par de l'eau d'alimentation qui se vaporise. Dans les conditions d'exploitation du générateur de vapeur, les tubes sont susceptibles de subir diverses dégradations et en particulier une corrosion par les fluides avec lesquels ils sont en contact. Certains tubes du générateur de vapeur peuvent devenir défectueux en service et présenter, par exemple, des fissures génératrices de fuites entraînant une contamination du fluide secondaire.

Il est donc nécessaire, pendant les périodes d'entretien du réacteur, d'intervenir sur le générateur de vapeur et d'effectuer le bouchage des tubes présentant des dégradations susceptibles d'entraîner des fuites.

On connaît des bouchons d'obturation des tubes d'un générateur de vapeur qui comportent une enveloppe de forme tubulaire fermée à l'une de ses extrémités par un fond et un noyau de serrage, également tubulaire, introduit dans l'alésage de l'enveloppe du bouchon pour assurer l'expansion diamétrale du bouchon après son introduction dans le tube du générateur de vapeur.

La paroi externe de l'enveloppe du bouchon comporte des cannelures en saillie radiale vers l'extérieur, sur une partie au moins de sa longueur. Le serrage par le noyau est effectué en particulier dans la zone de l'enveloppe du bouchon comportant des cannelures qui coopèrent avec la surface intérieure du tube pour assurer le blocage et l'étanchéité du bouchon.

Le noyau reste en place à l'intérieur de l'enveloppe du bouchon lors de la remise en fonctionnement du générateur de vapeur après entretien et assure en particulier le maintien du bouchon dont le fond est soumis d'un côté à la pression régnant à l'intérieur du tube du générateur de vapeur et de l'autre côté à la pression de l'eau primaire remplissant la boîte à eau du générateur de vapeur.

Dans le cas d'un tube du générateur de vapeur présentant une fuite, la pression à l'intérieur du tube correspond à la pression de l'eau d'alimentation du générateur de vapeur, cette pression étant très largement inférieure à la pression primaire.

On effectue également, avant la mise en service des générateurs de vapeur, le bouchage préventif de certains tubes qui risquent de se fissurer rapidement et de produire des fuites indésirables. Dans ce cas, le volume intérieur du tube est rempli d'air qui est isolé à la fois de l'eau primaire et de l'eau d'alimentation et qui est à une pression très inférieure à la pression primaire.

Dans tous les cas, les tubes du générateur de vapeur sont obturés à chacune de leurs extrémités qui débouchent de part et d'autre de la cloison de la boîte à eau.

L'enveloppe du bouchon est réalisée en un alliage de nickel ayant subi un traitement thermique permettant d'améliorer sa tenue à la corrosion et aux sollicitations mécaniques et thermiques, dans l'ambiance du générateur de vapeur en service.

Cependant, on a pu observer, qu'après un certain temps de fonctionnement du générateur de vapeur, l'enveloppe des bouchons d'obturation des tubes du faisceau dont on a réalisé le bouchage présente des fissures circonférentielles, en particulier dans les zones situées juste au-dessus et juste en-dessous du noyau expanseur.

Ces fissures peuvent conduire à des ruptures des bouchons qui se traduisent par une perte d'étanchéité de l'extrémité du tube, si bien que l'eau primaire est susceptible de pénétrer à l'intérieur du tube.

En outre, dans le cas d'une rupture au-dessus du noyau expanseur, la partie supérieure du bouchon comportant le fond de fermeture étanche est propulsée violemment à l'intérieur du tube sous l'effet de la différence entre la pression primaire et la pression régnant dans le tube. La partie supérieure du bouchon se comporte alors comme un projectile susceptible d'endommager le tube du générateur de vapeur correspondant et les tubes voisins du faisceau.

On ne connaissait pas jusqu'ici de dispositif permettant de limiter les fuites et d'éviter les risques de rupture et d'éjection à grande vitesse des enveloppes des bouchons d'obturation des tubes de générateur de vapeur des réacteurs nucléaires à eau sous pression.

Le but de l'invention est donc de proposer un dispositif d'obturation et de retenue d'un bouchon de fermeture étanche d'un tube de générateur de vapeur comportant une enveloppe de forme tubulaire fermée à l'une de ses extrémités par un fond étanche engagée dans une extrémité du tube, de manière que le fond soit disposé à l'intérieur du tube et un noyau traversé par un alésage taraudé à sa partie centrale engagé à l'intérieur de l'enveloppe pour réaliser le blocage du bouchon dans le tube par expansion diamétrale de l'enveloppe, ce dispositif permettant de limiter les fuites éventuelles et d'éviter les risques de rupture et d'éjection de l'enveloppe du bouchon de fermeture du tube, dans le générateur de vapeur en service.

Dans ce but, le dispositif d'obturation et de retenue suivant l'invention comporte une tige filetée susceptible d'être vissée dans le trou taraudé traversant le noyau et solidaire à l'une de ses extrémités d'un élément de blocage dont le diamètre extérieur est supérieur au diamètre de la tige, destiné à venir s'engager dans l'extrémité de l'enveloppe du bouchon opposée au fond de fermeture, lorsque la tige filetée est vissée dans l'alésage du noyau, et muni de moyens coopérant avec l'extrémité de l'enveloppe du bouchon pour réaliser le blocage en rotation et/ou en translation du dispositif d'obturation.

Afin de bien faire comprendre l'invention, on va maintenant décrire, à titre d'exemples non limitatifs, en se référant aux figures jointes en annexe, plusieurs modes de réalisation d'un dispositif d'obturation et de retenue suivant l'invention.

La figure 1 est une vue en coupe par un plan axial de symétrie d'un bouchon suivant l'art antérieur en position de fermeture étanche de l'extrémité d'un tube d'un générateur de vapeur d'un réacteur nucléaire à eau sous pression.

La figure 2 est une vue en coupe par un plan axial de symétrie d'un bouchon de fermeture d'un tube de générateur de vapeur comportant un dispositif d'obturation et de retenue suivant l'invention et suivant un premier mode de réalisation.

La figure 3 est une vue en coupe par un plan axial de symétrie d'un bouchon de fermeture d'un tube de générateur de vapeur comportant un dispositif d'obturation et de retenue suivant l'invention et suivant un second mode de réalisation.

La figure 4 représente une variante du dispositif suivant la figure 3.

La figure 5 est une vue en coupe par un plan axial de symétrie d'un bouchon de fermeture d'un tube de générateur de vapeur comportant un dispositif d'obturation et de retenue suivant l'invention et suivant un troisième mode de réalisation.

La figure 6 est une vue en coupe par un plan axial de symétrie d'un bouchon de fermeture de tube de générateur de vapeur comportant un dispositif d'obturation et de retenue suivant l'invention et suivant un quatrième mode de réalisation.

La figure 6A est une vue agrandie du détail A de la figure 6.

La figure 7 est une vue en coupe par un plan axial de symétrie d'un bouchon de fermeture de tube de générateur de vapeur comportant un dispositif d'obturation et de retenue suivant l'invention et suivant un cinquième mode de réalisation.

La figure 7A est une vue en élévation latérale du dispositif d'obturation et de retenue du bouchon représenté sur la figure 7.

La figure 7B est une vue suivant B de la figure 7A.

La figure 8 est une vue en coupe par un plan axial de symétrie d'un bouchon de fermeture d'un tube de générateur de vapeur comportant un dispositif d'obturation et de retenue suivant un sixième mode de réalisation.

La figure 8A est une vue en coupe du dispositif d'obturation et de retenue du bouchon représenté sur la figure 8 avant sa mise en place dans le bouchon.

La figure 9 est une vue en coupe par un plan axial de symétrie d'un bouchon de fermeture d'un tube de générateur de vapeur comportant un dispositif d'obturation et de retenue suivant l'invention et suivant un septième mode de réalisation.

La figure 10 est une vue en coupe par un plan axial de symétrie d'un bouchon de fermeture d'un tube de générateur de vapeur comportant un dispositif d'obturation et de retenue suivant l'invention et suivant un huitième mode de réalisation.

La figure 10A est une vue de dessous suivant A de la figure 10.

La figure 11 est une vue en élévation avec coupe partielle par un plan axial de symétrie d'un bouchon de fermeture d'un tube de générateur comportant un dispositif d'obturation et de retenue du type représenté sur les figures 10 et 10A suivant une première variante de réalisation, le noyau expanseur du bouchon étant dans une première position de serrage.

La figure 11A est une vue analogue à la figure 1 montrant le bouchon avec son noyau expanseur dans sa position basse de serrage maximal.

La figure 12 est une vue en élévation et en coupe partielle montrant une pièce de freinage du dispositif d'obturation en position permettant son insertion dans l'ouverture de la tige filetée.

La figure 13 est une vue en élévation et en coupe partielle d'un bouchon de fermeture d'un tube de générateur de vapeur comportant un dispositif d'obturation et de retenue du type représenté sur les figures 10 et 10A suivant une seconde variante de réalisation, le noyau expanseur du bouchon étant dans une première position de serrage.

La figure 13A est une vue analogue à la figure 13 montrant le bouchon avec son noyau expanseur dans une seconde position correspondant à sa position basse de serrage maximal.

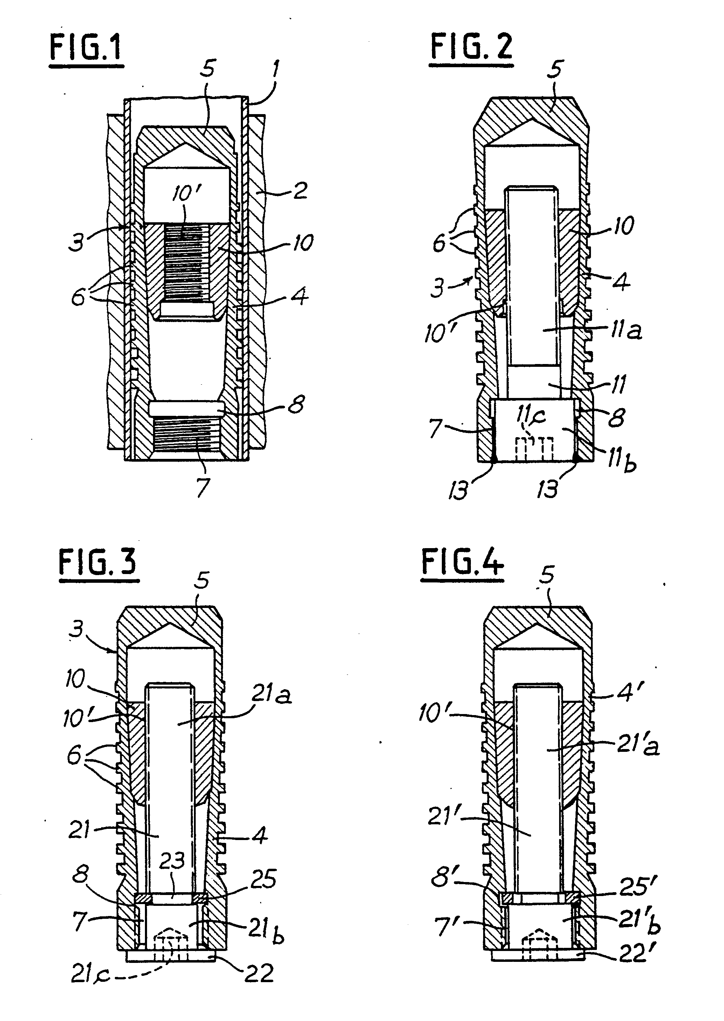

Sur la figure 1, on voit l'extrémité d'un tube 1 d'un générateur de vapeur fixé par sertissage à l'intérieur d'une ouverture traversant la plaque tubulaire 2 du générateur de vapeur.

Un bouchon 3 est fixé à l'intérieur de l'extrémité du tube 1 de manière à assurer sa fermeture étanche.

Le bouchon 3 comporte une enveloppe tubulaire 4 fermée par un fond 5 à l'une de ses extrémités et présentant sur sa surface externe des cannelures annulaires en saillie radiales 6.

L'extrémité ouverte de l'enveloppe 4 opposée au fond 5 du bouchon se présente sous la forme d'un alésage taraudé 7 limité vers l'intérieur du bouchon par une gorge annulaire 8.

Le bouchon d'obturation 3 comporte également un noyau expanseur 10 présentant une surface extérieure de forme tronconique et un alésage central taraudé 10'.

Le diamètre de l'alésage taraudé 10' du noyau expanseur 10 est sensiblement inférieur au diamètre de l'alésage taraudé 7 de la partie d'extrémité inférieure du bouchon opposée au fond 5.

L'alésage intérieur de l'enveloppe 4 du bouchon 3 présente un diamètre intérieur maximal dans sa partie supérieure en-dessous du fond 5 et un diamètre minimal dans sa partie inférieure. Cet alésage présente une forme tronconique correspondant à la forme tronconique de la surface extérieure du bouchon expanseur 10 sur une partie au moins de sa longueur.

Lorsqu'on effectue la mise en place du bouchon 3 dans le tube 1, le noyau expanseur 10 se trouve dans la partie supérieure à grand diamètre de l'alésage de l'enveloppe 4.

L'expansion diamétrale de l'enveloppe 4 à l'intérieur du tube 1 est obtenue par traction sur le noyau expanseur 10 grâce à une tige filetée d'un outil de traction engagée dans l'alésage taraudé 10' du noyau 10.

Le noyau expanseur 10 vient dans une position où il assure l'expansion de l'enveloppe 4 dans le tube 1, dans une zone de l'enveloppe comportant des cannelures externes 6. Le contact sous forte pression des cannelures 6 et de la surface intérieure du tube 1 réalise le blocage et l'étanchéité du bouchon.

Pour effectuer le démontage du bouchon, on exerce une poussée sur le noyau expanseur 10 pour le déplacer en direction de la partie supérieure à grand diamètre de l'enveloppe 4. Le noyau 10 peut venir en contact avec le fond 5 sur lequel il exerce une poussée assurant une extension de l'enveloppe 4 du bouchon. La poussée sur le noyau 10 est exercée par un outil comportant une tige de poussée vissée dans l'alésage tauraudé 10' du noyau 10 et un corps fixé par vissage dans l'alésage taraudé 7 de l'enveloppe du bouchon par rapport auquel la tige est mobile. Lorsqu'on a réalisé l'extension de l'enveloppe du bouchon, celui-ci peut être extrait du tube 1 par simple traction, grâce à l'effet de striction obtenu.

Sur la figure 2, on a représenté un bouchon de fermeture d'un tube de générateur de vapeur du type représenté sur la figure 1, dans lequel a été placé un dispositif d'obturation et de retenue suivant l'invention.

Dans toute la suite de la description, les éléments constitutifs du bouchon proprement dit seront désignés par les repères déjà utilisés pour désigner les éléments correspondants du bouchon représenté sur la figure 1.

Le dispositif d'obturation et de retenue il du bouchon 3 est réalisé sous la forme d'une vis dont la partie filetée 11a constitue une tige qui peut être engagée par vissage à l'intérieur de l'alésage taraudé 10' du noyau expanseur 10. Le dispositif 11 comporte une tête 11b dont le diamètre est supérieur au diamètre de la tige 11a et inférieur au diamètre intérieur de l'alésage taraudé 7 de l'enveloppe du bouchon. La tête 11b comporte une ouverture à section hexagonale du type six pans creux 11c permettant d'assurer le vissage du dispositif 11 dans le noyau expanseur 10 du bouchon.

La mise en place du dispositif d'obturation et de retenue 11 à l'intérieur de l'alésage du bouchon est effectuée dans le cas où des fissures ont été décelées dans l'enveloppe 4 du bouchon. Cette mise en place pourrait être effectuée également a priori après qu'on ait effectué le bouchage du tube.

Le vissage du dispositif 11 dans l'alésage du noyau 10 est poursuivi jusqu'au moment où la tête 11b a pénétré entièrement dans la partie d'entrée de l'alésage du bouchon opposée à son fond 5. En fin de vissage, l'épaulement du dispositif 11 séparant ses parties à petit et à grand diamètre peut venir en appui sur le fond de la gorge 8.

On effectue alors le blocage en rotation et en translation du dispositif d'obturation 11 par des points de soudure 13 assurant la fixation de la tête 11b du dispositif 11 sur la partie d'extrémité de l'enveloppe 4 du bouchon.

Lors de la remise en service du générateur de vapeur, après mise en place du dispositif d'obturation 11 dans le bouchon 3, l'eau primaire sous pression du générateur de vapeur peut encore pénétrer à l'intérieur de l'alésage de l'enveloppe 4, le dispositif d'obturation 11 n'étant pas fixé de manière étanche sur l'extrémité d'entrée du bouchon.

Cependant, l'eau primaire subit une perte de charge importante, dans la traversée des espaces de faible épaisseur subsistant entre la tête 11b et l'alésage taraudé 7 et surtout, au niveau des surfaces en contact de la tige filetée 11a et de l'alésage taraudé 10' du noyau expanseur 10.

La fuite de liquide primaire, au niveau du bouchon, lorsque celui-ci présente des fissures ou une zone de rupture, se trouve limitée à une valeur faible.

Dans le cas d'une rupture du bouchon dans sa partie supérieure, la pression qui s'exerce sur le fond 5 du bouchon diminue très rapidement et ne peut être maintenue par le flux limité d'eau primaire, ce qui limite les risques d'éjection de la partie supérieure du bouchon sous l'effet de la pression primaire.

On évite donc une détérioration ou une rupture du tube par éjection à grande vitesse de la partie supérieure du bouchon, sous l'effet de la pression primaire.

En outre, le dispositif 11 assure le maintien de la partie inférieure du bouchon et du noyau expanseur 10 dans lequel est vissée la tige filetée 11a.

Dans le cas d'une rupture du bouchon en-dessous du noyau expanseur, le maintien en place du bouchon est assuré, par l'intermédiaire du dispositif 11 et du noyau expanseur 10. Dans tous les cas, on limite les fuites de fluide primaire vers la partie secondaire du générateur de vapeur.

Un second mode de réalisation du dispositif d'obturation et de retenue d'un bouchon de fermeture d'un tube de générateur de vapeur a été représenté sur les figures 3 et 4.

Le dispositif 21 représenté sur la figure 3 comporte une tige filetée 21a qui peut être engagée dans l'alésage taraudé 10' du noyau expanseur 10 et une tête 21b à diamètre élargi qui vient se loger dans l'alésage d'entrée 7 de l'enveloppe 4 du bouchon. Cette partie 21b comporte à son extrémité une collerette d'appui 22. La partie élargie 21b comporte également une ouverture profilée 21c de forme hexagonale constituant une surface prismatique creuse à six pans dans laquelle on peut introduire un outil de vissage et de dévissage de la tige 21a dans le noyau expanseur 10.

Le dispositif d'obturation 21 comporte de plus, à la partie supérieure de la tête à diamètre élargi 21b, une gorge torique 23 dont la section est sensiblement semi-circulaire. Une bague élastique 25 éventuellement fendue est placée dans la gorge 23, avant l'introduction du dispositif d'obturation à l'intérieur du bouchon 3.

Pendant le vissage du dispositif d'obturation 21, la rondelle élastique 25 se rétracte dans les directions radiales à l'intérieur de la gorge 23 et peut ainsi être poussée à l'intérieur de l'alésage taraudé 7 de l'enveloppe 4 du bouchon, jusqu'au moment où la bague 25 parvient à l'extrémité de l'alésage, au niveau de la gorge 8.

La rondelle élastique 25 vient se loger dans la gorge 8 par expansion radiale élastique en réalisant le blocage du dispositif 21 par clipsage. De plus, dans la position de blocage du dispositif d'obturation 21, la collerette 22 est en appui sur l'extrémité de l'enveloppe 4 du bouchon 3 et participe ainsi au blocage du dispositif d'obturation dans le bouchon.

Sur la figure 4, on a représenté une variante de réalisation du dispositif d'obturation représenté sur la figure 3 ; les éléments du dispositif représentés sur la figure 4 correspondant aux éléments du dispositif représenté sur la figure 3 portent la même référence mais avec l'exposant '.

Dans le cas de la variante de réalisation de la figure 4, une bague élastique torique à section carrée 25' est enfilée sur la partie inférieure de la tige 21'a pour venir en appui sur un épaulement séparant l'extrémité de la tige 21'a de la tête à grand diamètre 21'b.

Pendant le vissage du dispositif 21' à l'intérieur du bouchon, la bague élastique à section carrée 25' se rétracte pour passer à l'intérieur de l'alésage fileté 7'.

Lorsque la bague élastique 25' parvient à l'extrémité du filetage, elle réalise le clipsage du dispositif 21' par expansion diamétrale à l'intérieur d'une partie élargie non filetée 8' de l'alésage 7' délimitée par un rebord usiné à l'intérieur de l'enveloppe 4' du bouchon.

Le dispositif d'obturation représenté sur les figures 3 et 4 présente les mêmes avantages que le dispositif représenté sur la figure 2, en ce qui concerne la limitation des fuites et de la pression au niveau du fond du bouchon et en ce qui concerne la retenue du bouchon.

En outre, le dispositif d'obturation selon le mode de réalisation représenté sur les figures 3 et 4 peut être démonté par simple dévissage, le clips 25 ou 25' subissant une rétraction diamétrale, lorsqu'on exerce un couple de dévissage suffisant sur le dispositif 21 ou 21'.

Dans les deux cas, une collerette 22 ou 22' assure le blocage du dispositif d'obturation lorsque la pression primaire s'exerce sur ce dispositif.

Comme dans le mode de réalisation représenté sur la figure 2, le dispositif d'obturation n'est pas totalement étanche et de l'eau primaire vient remplir en service l'enveloppe du bouchon, si bien que les différents éléments constituant le dispositif d'obturation et le bouchon sont soumis au contact d'un même fluide et porté à une même température.

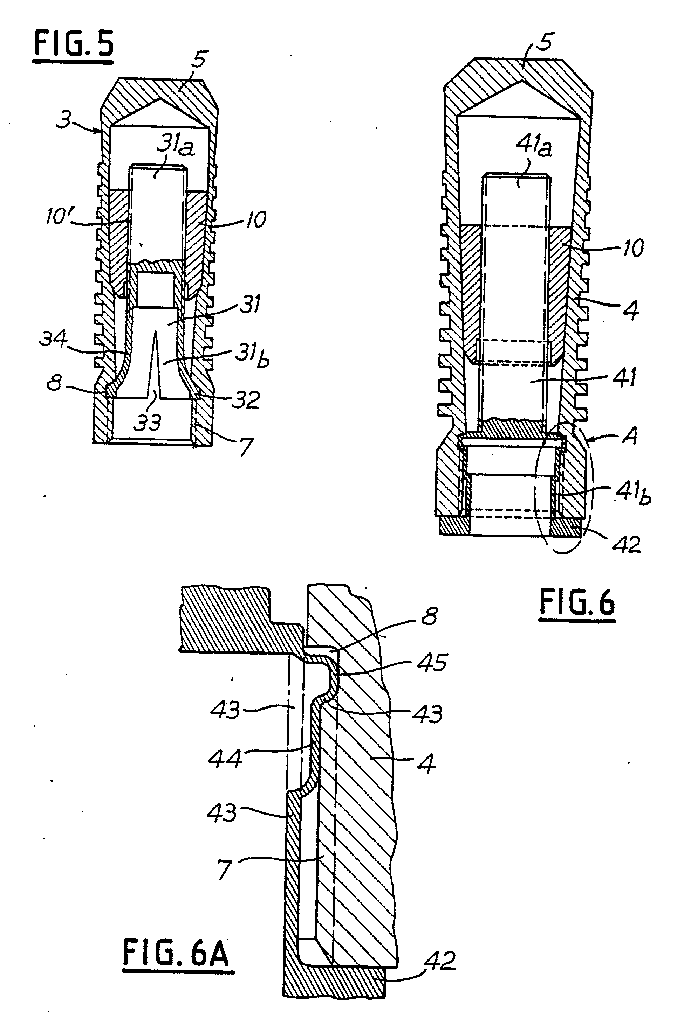

Sur la figure 5, on a représenté un troisième mode de réalisation d'un dispositif d'obturation et de retenue suivant l'invention.

Les différentes parties du bouchon 3 portent les mêmes repères que sur les figures 1, 2 et 3.

Le dispositif d'obturation 31 comporte une tige filetée 31a et une partie d'extrémité 31b rapportée sur la tige 31a et dans son prolongement axial, comportant une partie inférieure dont le diamètre est sensiblement supérieur au diamètre de la tige 31a.

La partie 31b du dispositif est constituée par un élément tubulaire évasé à son extrémité inférieure 32 et comportant plusieurs fentes 33 de direction sensiblement axiale. Ces fentes 33 délimitent des lamelles élastiques 34 comportant un talon d'appui à leur extrémité correspondant à l'extrémité de la partie 31b du dispositif.

La partie 31b du dispositif peut être constituée par quatre ou six lamelles, suivant la flexibilité recherchée.

Lorsqu'on réalise le vissage de la tige filetée 31a dans l'alésage taraudé 10' du bouchon expanseur 10, les lamelles 34 fléchissent vers l'intérieur et permettent une rétraction diamétrale de la partie 31b du dispositif 31 assurant le passage de cette partie 31b dans l'alésage fileté 7 du bouchon.

Lorsque les talons d'extrémité des lamelles 34 parviennent au niveau de la gorge 8 par laquelle se termine la partie filetée de l'alésage 7, les lamelles 34 peuvent s'écarter les unes des autres pour réaliser l'expansion diamétrale de la partie 31b du dispositif. Les talons d'extrémité des lamelles 34 réalisent le blocage du dispositif d'obturation contre un rebord usiné dans l'enveloppe 4 du bouchon et délimitant la gorge 8.

Comme précédemment, le dispositif d'obturation et de retenue représenté sur la figure 5 permet de limiter la fuite de fluide primaire dans le volume intérieur de l'enveloppe du bouchon. Dans le cas d'une fissuration et d'une rupture du bouchon au-dessus du noyau expanseur 10, la pression diminue très rapidement et ne peut pas être maintenue au niveau de la pression primaire, au contact de la surface intérieure du fond 5 du bouchon, du fait de la fuite limitée de fluide primaire, en particulier le long du filetage de la tige 31a engagée dans le bouchon expanseur 10.

Comme dans le cas du mode de réalisation représenté sur les figures 3 et 4, le dispositif d'obturation représenté sur la figure 5 peut être démonté par dévissage de la tige 31a.

Dans le cas du mode de réalisation représenté sur les figures 6 et 6A, le dispositif d'obturation et de retenue 41 est constitué par une tige filetée 41a solidaire, à l'une de ses extrémités, d'une partie élargie 41b constituée par une virole mince déformable 43 solidaire, à son extrémité opposée à la tige filetée 41a, d'une collerette d'appui 42.

On a représenté sur la figure 6A en traits mixtes la forme d'origine de la partie supérieure de la virole 43 et en traits pleins la forme de cette partie 43 après déformation de manière à réaliser le blocage du dispositif d'obturation 41 dans le bouchon.

La virole mince 43 présente sur toute sa longueur, dans sa forme d'origine, un diamètre extérieur inférieur au diamètre intérieur de l'alésage taraudé 7 du bouchon.

Après mise en place du dispositif d'obturation par vissage de la tige 41a dans l'alésage taraudé du noyau expanseur 10, on introduit un outil à l'intérieur de la virole déformable 43 pour réaliser sa déformation et son expansion diamétrale comme il est visible sur la figure 6A.

Une première partie 44 de la virole 43 subit une expansion diamétrale de manière à venir en contact avec la surface intérieure de l'alésage taraudé 7. Une seconde partie 45 de la virole déformable 43 subit une expansion diamétrale supplémentaire pour venir se loger dans la gorge 8 située au-dessus de la partie taraudée de l'alésage 7 à l'intérieur de l'enveloppe 4 du bouchon.

On réalise ainsi la fixation définitive du dispositif d'obturation à l'intérieur du bouchon.

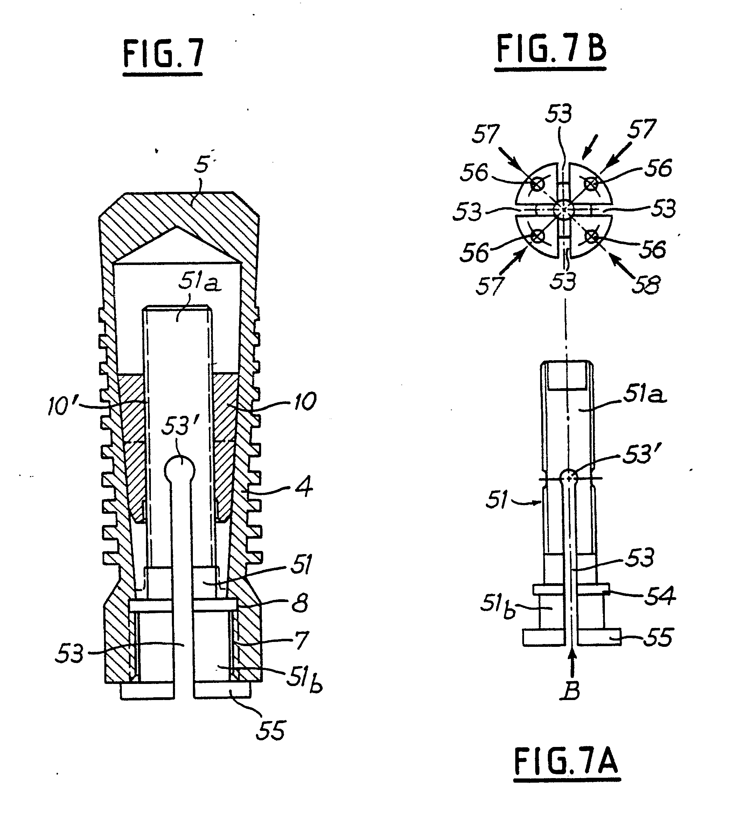

Dans le mode de réalisation représenté sur les figures 7, 7A et 7B, le dispositif d'obturation et de retenue 51 est constitué par une tige filetée 51a solidaire, à l'une de ses extrémités, d'une partie à diamètre élargi 51b. La partie à diamètre élargi 51b est séparée de la partie à plus faible diamètre constituant la tige filetée 51a par une collerette annulaire 54. La partie élargie 51b comporte également, à son extrémité opposée à la collerette 54, une seconde collerette 55 destinée à venir en appui sur l'extrémité de l'enveloppe 4 du bouchon pour réaliser le blocage du dispositif d'obturation après sa mise en place.

Le dispositif 51 comporte quatre fentes 53 placées à 90° les unes des autres, sur toute la longueur de la partie 51b à diamètre élargi et sur une partie de la longueur de la tige filetée 15a délimitant quatre branches flexibles. Les fentes 53 sont terminées par des lumières de forme arrondie 53', au niveau de la tige filetée 51a.

La collerette 55 est percée de quatre trous 56 qui sont placés chacun à l'extrémité d'une branche délimitée par deux fentes 53.

Les trous 56 permettent d'engager des doigts d'extrémité d'un outillage de serrage permettant de rapprocher les unes des autres dans des directions radiales 57 les quatre branches du dispositif 51 délimitées par les fentes 53.

Lorsque les branches du dispositif 51 sont placées dans leur position rapprochée, la collerette 54 peut être introduite dans l'alésage taraudé 7 du bouchon, de façon à permettre le vissage de la tige 51a dans le trou taraudé 10' du noyau expanseur 10.

On poursuit le vissage de la tige sia dans le noyau expanseur 10, jusqu'au moment où la collerette 54 parvient au niveau de la gorge 8 délimitant la partie filetée de l'alésage 7. On relâche alors la pression de serrage de l'outillage, si bien que les branches délimitées par les fentes 53 se déplacent vers l'extérieur, par élasticité. Les quatre parties de la collerette 54 viennent se loger à l'intérieur de la gorge 8, pour assurer le blocage du dispositif d'obturation 51 à l'intérieur de l'enveloppe 4 du bouchon. Le blocage du dispositif d'obturation 51 est complété par mise en appui de la collerette 55 sur le fond de l'enveloppe du bouchon.

Le dispositif représenté sur les figures 7, 7A et 7B permet, comme les dispositifs précédemment décrits, de limiter les fuites de fluide primaire en cas de fissuration ou de rupture du bouchon et les risques d'éjection, sous l'effet de la pression primaire, de la partie supérieure du bouchon.

Le dispositif est démontable grâce à l'outil de serrage des branches qui peut être utilisé pour effectuer le dévissage de la tige filetée 51a.

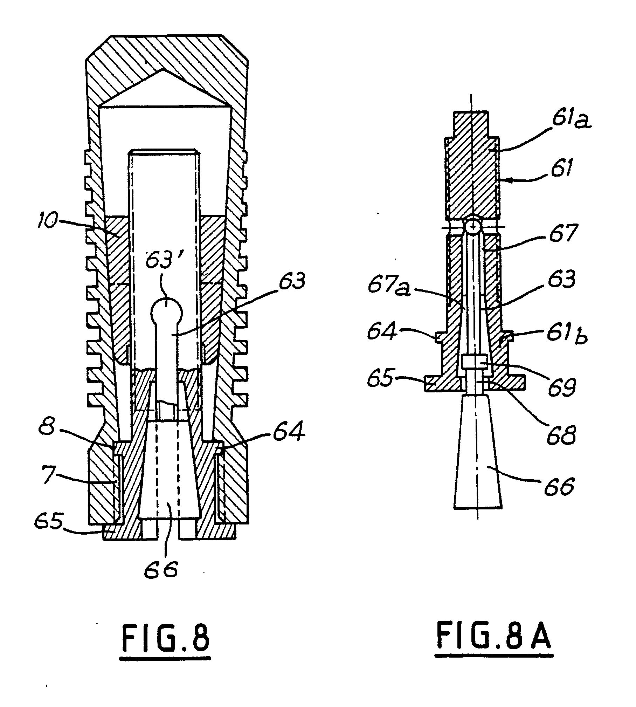

Sur les figures 8 et 8A, on a représenté une variante de réalisation du dispositif qui a été décrit en se référant aux figures 7, 7A et 7B.

Ce dispositif 61 est constitué de manière générale de la même façon que le dispositif 51 et présente une tige filetée 61a solidaire d'une partie à grand diamètre 61b elle-même délimitée par deux collerettes 64 et 65.

Le dispositif 61 comporte quatre fentes 63 à 90° traversant la partie à grand diamètre 61b sur toute sa longueur dans la direction axiale et une partie de la tige filetée 61a. Les fentes 63 délimitent quatre branches ayant une certaine flexibilité qui peuvent être éloignées les unes des autres en utilisant un dispositif d'écartement constitué par un élément tronconique 66 qui est introduit dans un alésage central 67 de l'élément 61 dans lequel débouche chacune des fentes 63. L'alésage 67 comporte une partie tronconique 67a dont la forme correspond à la surface extérieure de l'élément tronconique 66. L'élément tronconique 66 comporte une tige d'accrochage 68 terminée par un épanouissement 69 dont le diamètre est supérieur au diamètre de l'ouverture 67 lorsque les branches du dispositif 61 sont dans leur position normale où elles ne subissent pas de force d'écartement. De cette façon, l'élément tronconique 66 reste fixé au corps du dispositif d'obturation 61.

Lorsque les branches du dispositif 61 ne sont pas repoussées vers l'extérieur par le dispositif 66, le dispositif 61 peut être introduit à l'intérieur du bouchon, le diamètre extérieur de la collerette 64 étant inférieur au diamètre intérieur de l'alésage taraudé 7 du bouchon. On effectue le vissage de la tige filetée 61a dans le noyau expanseur 10 jusqu'au moment où la collerette 64 vient en vis-à-vis de la gorge 8 délimitant l'alésage taraudé 7. La collerette 65 est alors en contact avec l'extrémité du bouchon. On effectue alors le blocage du dispositif d'obturation dans le bouchon en exerçant une poussée axiale sur l'élément tronconique 66 qui vient se loger à l'intérieur de la partie tronconique 67a de l'alésage 67. Dans cette position, comme représenté sur la figure 8, les branches du dispositif 61 sont écartées, si bien que la collerette 64 vient se loger dans la gorge 8 et réalise le blocage du dispositif d'obturation.

La mise en place du dispositif d'obturation est irréversible, puisqu'il n'est plus possible de resserrer les branches du dispositif pour extraire la collerette 64 de la gorge 8.

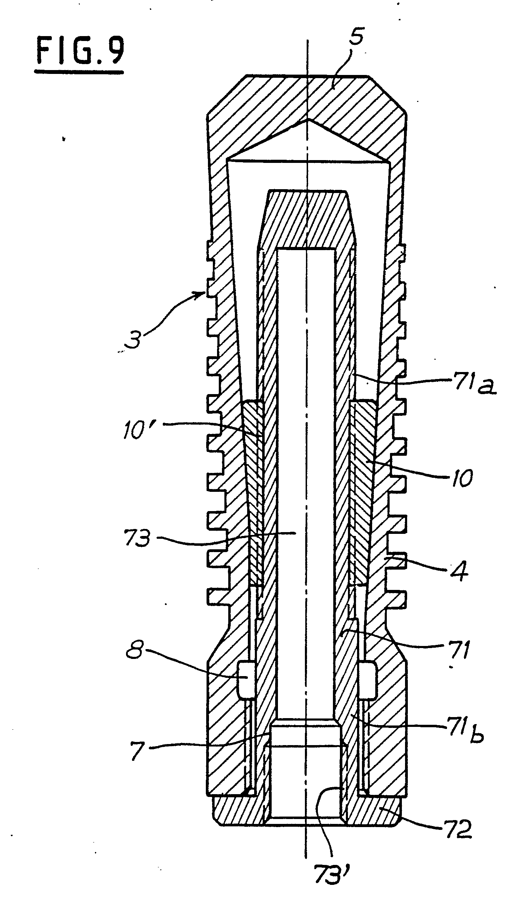

Sur la figure 9, on a représenté un bouchon dans lequel est introduit un dispositif d'obturation et de retenue 71 constitué par une tige filetée 71a solidaire à l'une de ses extrémités d'une tête 71b terminée par une collerette 72 destinée à venir en appui sur l'extrémité de l'enveloppe 4 du bouchon.

Le dispositif 71 comporte un alésage central borgne 73 fermé à l'intérieur de la tige filetée 71a et débouchant par la partie de tête 71b du dispositif, au niveau de la collerette 72.

Le filetage de la tige 71a présente un pas inférieur au pas de l'alésage taraudé 10' du noyau expanseur 10.

L'alésage central 73 de l'obturateur 71 se termine par une partie taraudée 73' dont le diamètre est supérieur au diamètre de la partie courante de l'alésage 73.

L'alésage taraudé 73' permet la fixation, à l'intérieur de l'alésage 73, d'un dispositif de mise en extension de la tige 71a de l'obturateur qui peut être constitué par un vérin dont le corps peut être vissé dans l'alésage taraudé 73' et dont la tige vient en contact de poussée avec le fond de l'alésage 73, pour réaliser l'extension de la tige filetée 71a.

La pression d'alimentation du vérin est telle que la force exercée sur la tige filetée 71a entraîne une extension de cette vis mettant en concordance parfaite les pas de vis de la tige filetée 71a et de l'alésage taraudé 10' du noyau expanseur 10.

La tige filetée 71a mise en extension par le vérin peut être vissée dans l'alésage taraudé du noyau expanseur 10.

A la fin de l'opération de vissage, la pression du vérin est relâchée et les filets de la tige filetée 71a et de l'alésage taraudé du noyau expanseur viennent se bloquer les uns sur les autres, du fait de la diminution du pas de vis de la tige filetée 71a, sous l'effet des forces de retour élastiques dans le métal de cette tige filetée.

Il en résulte un serrage de la tige filetée au niveau du noyau expanseur 10 et une rétraction de la partie de l'obturateur située entre le noyau et la collerette 72 qui vient s'appliquer avec pression contre l'extrémité du bouchon.

On a réalisé ainsi, de manière positive, un blocage de l'obturateur 71 à l'intérieur du bouchon 3.

Comme dans le cas des modes de réalisation décrits précédemment, l'obturateur 71 n'assure pas une fermeture étanche du volume intérieur de l'enveloppe 4 du bouchon qui est susceptible de se remplir de fluide primaire aussi bien dans sa partie située au-dessus du noyau expanseur 10 et en-dessous du fond 5, que dans sa partie située en-dessous du noyau expanseur 10.

En cas de fissuration ou de rupture du bouchon, les fuites de fluide primaire au niveau de l'obturateur sont fortement limitées, par effet de perte de charge, en particulier le long des filets de la tige filetée et de l'alésage du noyau expanseur, ce qui permet d'éviter des risques d'éjection brutale de la partie supérieure de l'enveloppe du bouchon et limite l'introduction de fluide primaire dans la partie secondaire du générateur de vapeur.

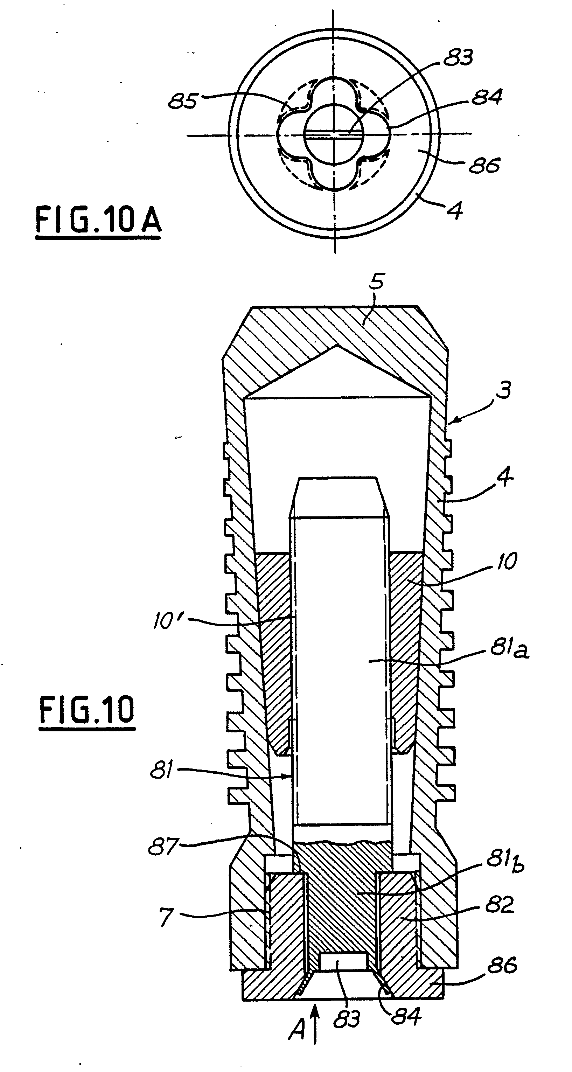

Sur les figures 10 et 10A, on a représenté un bouchon 3 comportant une enveloppe tubulaire 4 et un noyau expanseur 10, dans lequel est introduit un dispositif d'obturation et de retenue 81 constitué par une tige filetée 81a engagée dans l'alésage taraudé 10' du noyau expanseur 10 et un écrou 82 engagé dans l'alésage taraudé de l'enveloppe 4 constituant l'ouverture d'entrée du bouchon opposée au fond 5.

La tige filetée 81a comporte une extrémité 81b dont le diamètre est inférieur au diamètre intérieur de l'écrou 82 qui présente une forme annulaire ; lorsque le dispositif d'obturation 88 est mis en place dans le bouchon et fixé grâce à l'écrou 82 de la manière qui sera décrite ci-dessous, l'extrémité 81b de la tige filetée vient se loger dans l'alésage de l'écrou 82.

L'écrou 82 est fileté sur sa surface externe alors que son alésage central est lisse.

Le filetage de l'écrou 82 qui correspond au taraudage de l'ouverture 7 présente un pas de vis différent du pas de vis de la tige filetée 81a qui correspond au taraudage de l'alésage 10' du noyau expanseur.

L'extrémité 81b de la tige filetée 81a comporte sur sa face inférieure une fente de tournevis 83 et présente un prolongement 84 constitué par une virole mince déformable placée de manière coaxiale par rapport à la tige filetée 81a à la périphérie de la face inférieure de la partie d'extrémité 81b.

L'écrou 82 comporte une collerette d'appui 86 à l'une des extrémités de sa partie filetée.

L'alésage intérieur de l'écrou 82 comporte à l'intérieur de la collerette 86 quatre embrèvements 85 en saillie radiale vers l'extérieur.

La partie d'extrémité 81b de la tige 81a à diamètre réduit est délimitée par un épaulement 87 sur lequel l'écrou 82 est en butée quand le dispositif d'obturation est fixé en place dans le bouchon 3.

La mise en place et la fixation du dispositif d'obturation 81 dans le bouchon sont effectuées de la manière qui sera décrite ci-après. La tige filetée 81a est vissée dans l'alésage taraudé 10' du noyau expanseur en utilisant un tournevis dont la lame est introduite dans la fente 83.

L'écrou 82 est ensuite vissé dans l'alésage taraudé 7 jusqu'au moment où la collerette 86 vient en butée sur l'extrémité de l'enveloppe 4 du bouchon. La position de la tige filetée 81a peut être réglée de manière à annuler le jeu entre l'épaulement 87 et l'écrou 82 par dévissage de la tige filetée.

La tige filetée 81a et l'écrou 82 ne peuvent pas être dévissés simultanément, les pas de vis de leurs filetages étant différents.

Après vissage de la tige et de l'écrou, on réalise le blocage en rotation de ces deux pièces par sertissage en déformant la virole 84, à l'intérieur des embrèvements 85.

Le dispositif d'obturation et de retenue 81 fonctionne, en cas de fissuration de l'enveloppe du bouchon, de la même manière que les dispositifs précédemment décrits.

Dans tous les cas, les dispositifs décrits conformes à l'invention permettent soit de limiter les conséquences d'une fissuration ou d'une rupture de l'enveloppe d'un bouchon, soit encore d'augmenter la sécurité de ces bouchons en fonctionnement, si l'obturateur est mis en place aussitôt après la pose du bouchon, sans attendre l'apparition de fissures dans son enveloppe.

Dans le cas où l'enveloppe du bouchon viendrait à se rompre en-dessous du noyau, la tige filetée assure la retenue du noyau et de la partie supérieure de l'enveloppe.

Cependant, dans ce cas, les vibrations engendrées par la circulation de l'eau primaire venant en contact avec le bouchon peuvent entraîner des risques de séparation du noyau et de la tige filetée par dévissage, si bien que le dispositif de retenue ne joue plus son rôle.

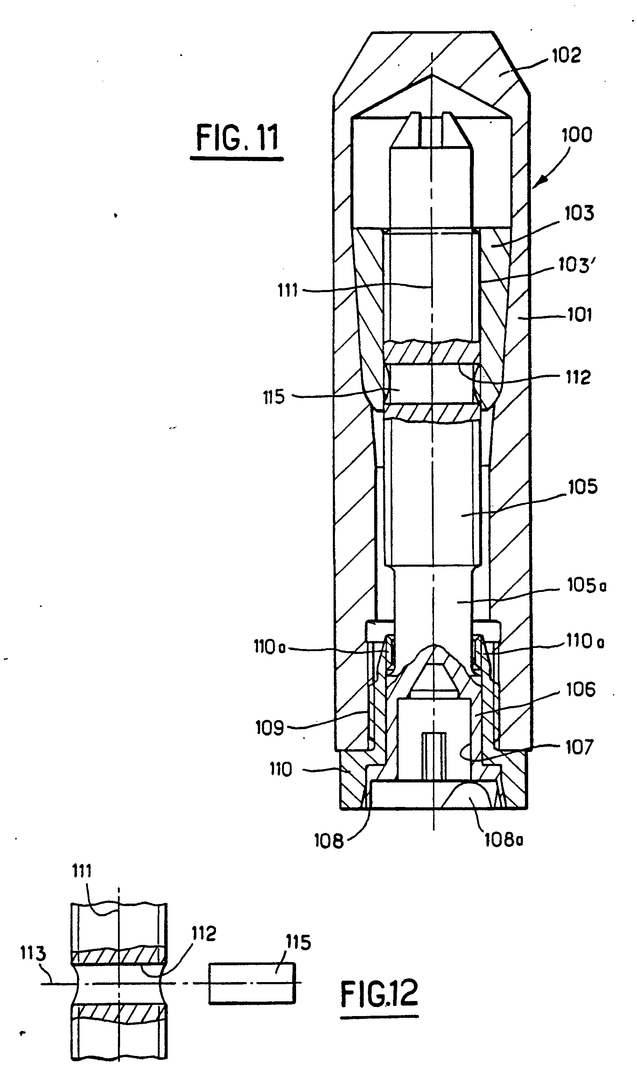

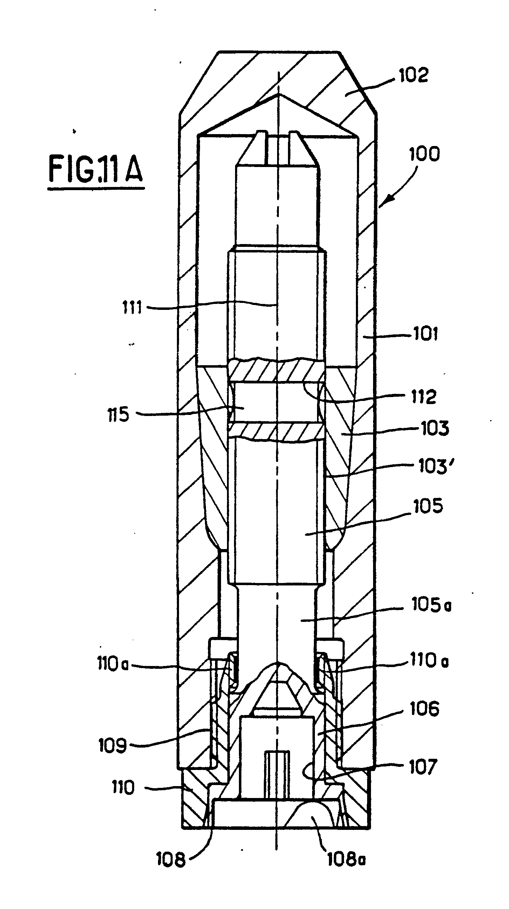

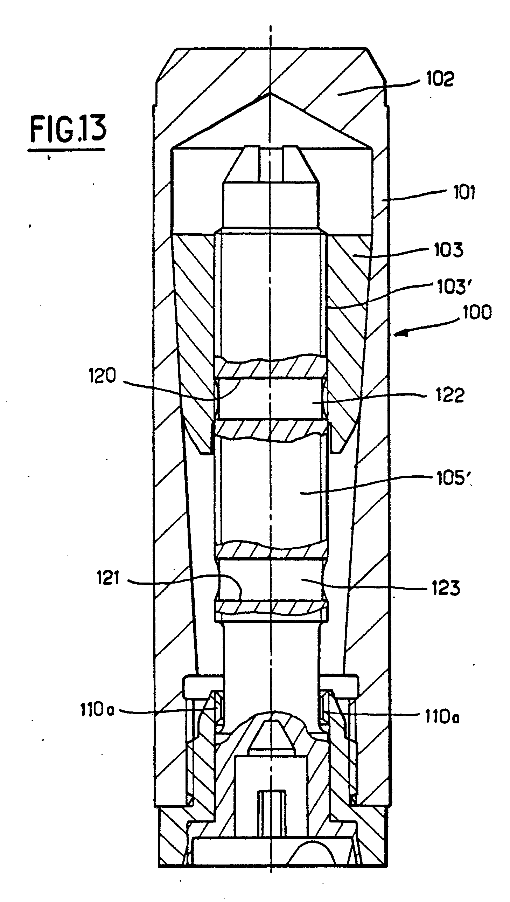

Sur les figures 11, 11A, 12, 13 et 13A, on a représenté un dispositif d'obturation et de retenue suivant l'invention comportant des moyens complémentaires permettant de limiter ou d'éviter des risques de dévissage du noyau engagé en force à l'intérieur de l'enveloppe du bouchon et donc d'améliorer la retenue de l'enveloppe du bouchon, en cas de rupture de cette enveloppe dans sa partie inférieure.

Dans le cas de ces modes de réalisation perfectionnés, la tige filetée comporte au moins une ouverture transversale perpendiculaire à son axe, débouchant de part et d'autre de la tige, dans laquelle est engagée une pièce de freinage destinée à venir en contact par des parties d'extrémité avec les filets du trou taraudé du noyau, lors du vissage de la tige filetée dans le noyau.

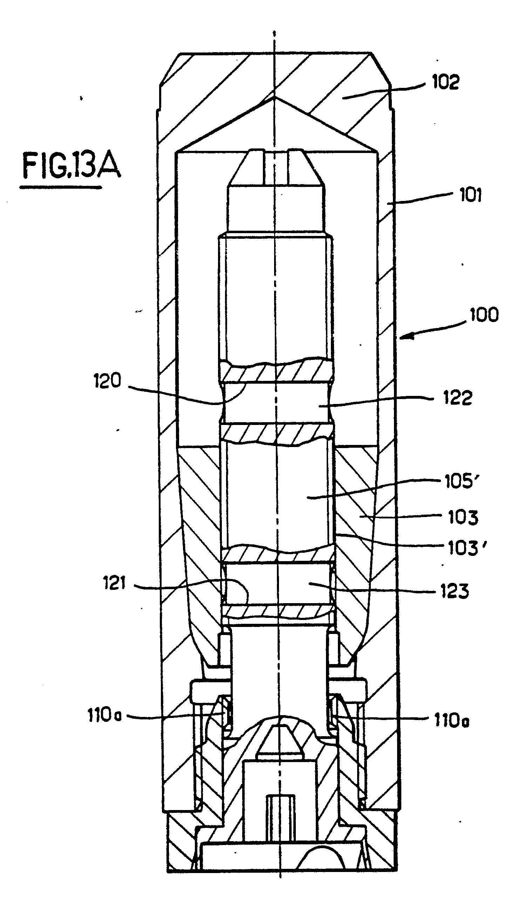

De manière générale, les bouchons de fermeture représentés sur les figures 11 et 13 ont une structure analogue à la structure du bouchon de fermeture représenté sur les figures 10 et 10A.

Le bouchon désigné de manière générale par le repère 100 comporte une enveloppe tubulaire 101 fermée à l'une de ses extrémités par un fond 102 et comportant un alésage intérieur de forme tronconique ou cylindrotronconique dans lequel est engagé un noyau expanseur 103 dont la forme tronconique correspond à celle de l'alésage de l'enveloppe 101 du bouchon.

La surface extérieure de l'enveloppe 101 peut comporter des cannelures en saillie radiale améliorant la fixation du bouchon à l'intérieur du tube lors de son expansion diamétrale.

Avant la mise en place du bouchon dans un tube du générateur de vapeur dont on réalise l'obturation, le noyau expanseur 103 est disposé dans la partie supérieure de l'alésage de l'enveloppe 101 qui constitue la partie à grand diamètre de l'alésage. Dans cette position, le noyau expanseur 103 n'exerce aucune action sur les parois de l'enveloppe 101. L'expansion de l'enveloppe du bouchon à l'intérieur du tube est réalisée par traction vers le bas sur le noyau expanseur 103.

Sur la figure 11, on a représenté une première position de serrage du bouchon, dans lequel le noyau expanseur est dans une première position intermédiaire entre sa position haute et sa position basse.

Sur la figure 11A, on a représenté le bouchon avec le noyau expanseur 103 dans sa position basse correspondant au serrage maximal d'un bouchon ayant une amplitude de déplacement accrue du noyau expanseur 103.

Le dispositif d'obturation suivant l'invention qui présente une structure générale analogue à celle représentée sur les figures 10 et 10A comporte une tige filetée 105 engagée dans l'alésage taraudé 103' du noyau expanseur 103, dans sa position de service où cette tige assure la retenue du noyau expanseur 103. La tige filetée 105 comporte une extrémité lisse 105a prolongée vers le bas par une partie élargie diamétralement 106 à l'intérieur de laquelle est usiné un alésage 107 de direction axiale ayant un profil et une section transversale permettant l'engagement d'un outil de forme appropriée dans cet alésage constituant la partie inférieure de la tige filetée 105, pour effectuer le vissage de la tige 105 à l'intérieur de l'alésage taraudé 103' du noyau expanseur 103 en position de serrage à l'intérieur de l'enveloppe 101 du bouchon.

La partie 106 constituant l'extrémité inférieure de la tige 105 est solidaire d'une virole mince déformable 108 dont l'axe est confondu avec l'axe de la tige filetée 105.

La partie inférieure ouverte de l'enveloppe du bouchon comporte un alésage taraudé 109 dans lequel est vissée une pièce 110 constituée sous la forme d'une vis creuse tubulaire ou d'un écrou ayant un filetage externe correspondant en ce qui concerne son pas et sa dimension, à la partie taraudée 109 de l'alésage de l'enveloppe 101 du bouchon.

La pièce 110 fixée par vissage à l'intérieur de l'enveloppe 101 du bouchon 100 constitue la partie inférieure de cette enveloppe dans laquelle vient s'engager l'élément de blocage de la tige 105 constitué par la virole déformable 108.

L'alésage intérieur de la pièce 110 comporte une partie élargie diamétralement dans laquelle vient s'engager la virole 108. Cet alésage comporte des embrèvements en saillie radiale vers l'extérieur dans lesquels on vient engager par repoussage des parties 108a de la virole déformable 108, pour assurer le blocage en rotation de la tige 105 engagée par vissage dans l'alésage 103' du noyau expanseur 103.

La pièce 110 comporte en outre un taraudage interne 110a à sa partie terminale supérieure. Ce taraudage 110a n'a comme objet que la mise en place de la pièce 110 sur la tige 105. Le pas et la dimension de ce taraudage correspondent donc au filetage de la tige 105.

L'alésage taraudé 103' du noyau expanseur 103 et l'alésage taraudé 109 de l'enveloppe 101 du bouchon présentent des pas de vis différents, si bien qu'après qu'on ait réalisé le blocage en rotation de la tige 105 par rapport à la pièce 110, l'ensemble constitué par la tige 105 et la pièce 110 ne peut plus être séparé du noyau expanseur 103 par dévissage.

Cependant, dans le cas d'une rupture de l'enveloppe 101 en-dessous du noyau expanseur 103, le noyau expanseur inséré en force dans l'alésage de l'enveloppe 101 est susceptible de se séparer de la tige 105 par dévissage.

Selon le présent perfectionnement, comme il est visible sur les figures 11 et 12, la tige 105 est percée d'une ouverture transversale 112 perpendiculaire à son axe 111 et débouchant de part et d'autre de la surface latérale de la tige 105, dans sa partie filetée.

De manière préférentielle, l'ouverture 112 est à section circulaire et comporte un axe 113 dirigé suivant un diamètre de la section de la tige 105.

Comme il est visible sur la figure 2, avant de réaliser le vissage de la tige filetée 105 dans l'alésage taraudé 103' du noyau 103, on engage et on introduit dans l'ouverture 112 une pièce de freinage 115 de forme cylindrique dont le diamètre est égal, au jeu de montage près, au diamètre intérieur de l'ouverture 112.

La longueur de la pièce de freinage ou insert 115 est inférieure au diamètre extérieur maximal de la partie filetée de la tige 105 et très légèrement supérieure au diamètre de cette tige en fond de filet.

Lorsque la pièce de freinage 115 est introduite en position centrée dans l'ouverture 112, seules ses parties d'extrémité, sur une petite longueur d'arc de sa section, sont très légèrement saillantes par rapport au bord de l'ouverture 112, dans ses parties débouchant sur la surface latérale filetée de la tige 105.

Lorsqu'on réalise le vissage de la tige 105 du dispositif d'obturation et de retenue suivant l'invention munie d'une pièce de freinage 115 introduite dans une ouverture transversale 112, à l'intérieur de l'alésage 103' d'un noyau 103 placé dans une position de serrage, comme représenté sur la figure 11 ou sur la figure 11A, les parties d'extrémité de la pièce de freinage 115 viennent en contact avec le premier filet de l'alésage taraudé 103' placé à l'extrémité inférieure de cet alésage taraudé 103'.

La pièce de freinage 115 est réalisée en un matériau dont la dureté est très inférieure à la dureté du matériau constituant le noyau expanseur 103. Le noyau expanseur 103 peut être constitué par un alliage de nickel à haute résistance et la pièce de freinage 115 par un matériau à base de nickel faiblement allié et de faible dureté.

Au moment où la pièce de freinage vient en contact avec le premier filet de l'alésage taraudé 103', le couple de serrage augmente de manière extrêmement sensible et reste élevé pendant le premier tour effectué par la tige filetée 105 après mise en contact de la pièce de freinage 115 avec le premier filet de l'alésage taraudé 103'.

En effet, pendant ce premier tour, le premier filet de l'alésage taraudé doit pénétrer à l'intérieur du métal des parties saillantes de la pièce de freinage 115, pour constituer des entailles assurant le passage des filets.

Le couple de serrage diminue ensuite de manière sensible à l'issue du premier tour, puis de manière progressive pendant les tours suivants de la tige filetée 105.

Dans le cas d'une pièce de freinage d'un dispositif d'obturation et de retenue d'un bouchon d'obturation d'un tube de générateur de vapeur en utilisant une pièce de freinage en alliage de nickel à faible dureté, on a pu observer une diminution progressive du couple de serrage pendant dix tours de la tige filetée 105, ce couple restant sensiblement supérieur au couple de serrage de la tige sans pièce de freinage à l'issue des dix tours.

Comme il est visible sur les figures 11 et 11A, en fin de vissage de la tige 105, la partie élargie 106 de la tige étant en butée contre la pièce 110 et la virole 108 en position de blocage à l'intérieur de l'alésage de la pièce 110, la pièce de freinage 115 est susceptible de se trouver à un niveau variable suivant la hauteur du trou taraudé 103' du noyau expanseur 103, en fonction de la position de serrage du noyau.

Dans le cas de la figure 11, la pièce de freinage 115 est en contact avec le premier filet ou avec l'un des premiers filets de l'alésage taraudé 103' alors que dans le cas de la figure 11A, la pièce de freinage 115 se trouve en contact avec un filet de l'alésage taraudé 103' situé à une distance relativement importante du premier filet d'engagement de l'alésage taraudé.

La position de la pièce de freinage 115 dans la partie filetée de la vis 105 est choisie de manière qu'au moment où la tige filetée est dans sa position définitive, la pièce de freinage 115 a effectué un nombre de tours compris entre un et dix à l'intérieur de l'alésage taraudé 103'. De cette manière, le couple de serrage de la tige 105 et donc le couple de desserrage du noyau expanseur par rapport à cette tige restent sensiblement supérieurs au couple de serrage ou de desserrage de la tige filetée ne comportant pas de pièce de freinage.

La position de la pièce de freinage 115 permet d'assurer dans tous les cas la mise en prise de la pièce de freinage avec l'un au moins des filets de l'alésage taraudé du noyau expanseur 103.

Dans le cas d'une rupture de l'enveloppe du bouchon en-dessous du noyau expanseur, pendant le fonctionnement du générateur de vapeur, le couple de desserrage sensiblement accru du noyau expanseur permet de limiter les risques de séparation par dévissage du noyau expanseur et de la partie supérieure de l'enveloppe du bouchon, de la tige filetée 105.

Sur les figures 13 et 13A, on a représenté une variante de réalisation du dispositif d'obturation perfectionné suivant l'invention.

Les éléments correspondants sur les figures 11 et 11A d'une part et 13 et 13A d'autre part portent les mêmes repères.

Le dispositif d'obturation et de retenue représenté sur les figures 13 et 13A est pratiquement identique au dispositif représenté sur les figures 11 et 11A et comporte une tige filetée 105' solidaire, à l'une de ses extrémités, d'une partie élargie permettant sa fixation par rapport à l'enveloppe du bouchon.

Afin d'accroître la sécurité du dispositif, en ce qui concerne la retenue de l'enveloppe du bouchon, la tige 105' comporte deux ouvertures transversales 120 et 121 traversant la partie filetée de la tige 105' dans deux zones espacées axialement et situées respectivement au voisinage du centre de la partie filetée et au voisinage de l'extrémité inférieure de cette partie filetée de la tige 105'.

Une pièce de freinage 122 est introduite avant vissage de la tige 105' dans l'ouverture 120 et une seconde pièce de freinage 123 est introduite dans la seconde ouverture 121.

Les pièces 122 et 123 sont, comme précédemment décrit en ce qui concerne la pièce 115, réalisées sous forme cylindrique en un matériau dont la dureté est inférieure au matériau du noyau expanseur 103. Les pièces de freinage 122 et 123 ont une longueur telle que leur partie latérale d'extrémité se trouve légèrement saillante par rapport au bord des extrémités débouchantes des ouvertures 120 et 121.

Comme il est visible sur la figure 13, la pièce de freinage supérieure 122 disposée dans l'ouverture 120 de la tige filetée se trouve en contact avec l'un des premiers filets de l'alésage taraudé 103', lorsque la tige filetée 105' est dans sa position définitive. La pièce de freinage 123 reste dans une zone de la tige 105' ne venant pas en contact avec l'alésage taraudé du noyau 103.

Le couple de desserrage du noyau 103, en cas de rupture de l'enveloppe 101 du bouchon en-dessous de ce noyau 103 est élevé, dans la mesure où la pièce de freinage 122 est en contact avec l'un des premiers filets de l'alésage 103'.

En se reportant à la figure 13A, on voit que dans la position définitive de la tige de retenue 105', la pièce de freinage supérieure 122 se trouve dans une zone située au-dessus du noyau 103 et la pièce de freinage inférieure 123 est en prise avec les filets de l'alésage taraudé 103', dans la partie initiale de cet alésage.

Le couple de desserrage du noyau 103, en cas de rupture de l'enveloppe du bouchon en-dessous du noyau expanseur, est élevé, dans la mesure où la pièce de freinage 123 n'est entrée en contact qu'avec les premiers filets de l'alésage taraudé 103'.

Pendant le vissage de la tige 105', le couple de serrage est relativement élevé pour permettre le passage de la pièce de freinage 122 dans l'alésage taraudé 103' du noyau expanseur 103.

Pour réduire ce couple de serrage jusqu'au moment où la pièce 123 vient en contact avec les filets de l'alésage 103', on prévoit une pièce de freinage supérieure 122 dont la longueur est légèrement inférieure à la longueur de la pièce de freinage 123.

Dans tous les cas, les moyens complémentaires représentés sur les figures 11, 11A, 12, 13 et 13A permettent d'améliorer l'efficacité du dispositif de retenue du bouchon, dans le cas d'une rupture de son enveloppe en-dessous du noyau expanseur.

La mise en place de l'obturateur peut être réalisée rapidement et de manière facilement automatisable, dans le cas de tous les modes de réalisation décrits ci-dessus.

Il est bien évident que l'invention ne se limite pas aux modes de réalisation qui ont été décrits.

En particulier, on peut réaliser le blocage en rotation et/ou en translation de l'obturateur à l'intérieur de l'enveloppe du bouchon, par un moyen différent des moyens qui ont été décrits.

Parmi ces moyens, on utilisera de préférence, soit un obturateur en forme de vis fendue suivant quatre secteurs, comme décrit avec référence aux figures 7, 7A et 7B ainsi que 8 et 8A, soit un obturateur comportant un écrou de fixation et de blocage, comme décrit avec référence aux figures 10 et 10A. Cependant, les autres modes de réalisation décrits et représentés peuvent également être utilisés de manière avantageuse suivant les conditions de mise en oeuvre de l'obturateur.

L'obturateur peut présenter une forme assez sensiblement différente de la forme d'une vis pleine ou creuse, comme il a été décrit ci-dessus.

Dans le cas de l'utilisation de moyens de freinage complémentaires de la tige filetée, l'ouverture traversant la tige peut être placée dans une direction transversale qui ne corresponde pas à un diamètre de la tige et cette ouverture peut avoir une section de forme quelconque.

La pièce de freinage introduite dans l'ouverture peut avoir une forme quelconque en fonction de la forme de la section de l'ouverture et peut être réalisée en un matériau quelconque, en fonction de la nature du matériau constituant le noyau expanseur.

On peut disposer, suivant la longueur de la tige, un nombre quelconque de pièces de freinage disposées dans des ouvertures transversales réparties suivant la longueur de la tige, de manière déterminée en fonction des positions possibles du noyau expanseur, après serrage du bouchon.

Il est bien évident également que les moyens complémentaires de freinage peuvent être appliqués à un dispositif d'obturation et de retenue d'une forme différente de celle qui a été décrite et en particulier à un dispositif d'obturation suivant l'un quelconque des modes de réalisation décrit.

Enfin, le dispositif d'obturation et de retenue suivant l'invention peut être utilisé non seulement dans le cas des bouchons de fermeture des tubes de générateur de vapeur des réacteurs nucléaires à eau sous pression mais encore dans le cas des bouchons de fermeture de tout tube de générateur de vapeur dont le fluide caloporteur est à une pression élevée.

## Revendications

1.- Dispositif d'obturation et de retenue d'un bouchon de fermeture étanche (3) d'un tube (1) de générateur de vapeur comportant une enveloppe (4) de forme tubulaire fermée à l'une de ses extrémités par un fond étanche (5), engagée dans une extrémité du tube (1) de manière que le fond (5) soit disposé à l'intérieur du tube (1) et un noyau (10) traversé par un alésage taraudé (10') à sa partie centrale, engagé à l'intérieur de l'enveloppe (4) pour réaliser le blocage du bouchon (3) dans le tube (1) par expansion diamétrale de l'enveloppe (4), caractérisé par le fait qu'il comporte une tige filetée (11a, 21a, 21'a, 31a, 41a, 51a, 61a, 71a) susceptible d'être vissée dans le trou taraudé (10') traversant le noyau (10) et solidaire à l'une de ses extrémités d'un élément de blocage (11b, 21b, 21'b, 31b, 41b, 51b, 61b, 71b) dont le diamètre extérieur est supérieur au diamètre de la tige, destiné à venir s'engager dans l'extrémité de l'enveloppe (4) du bouchon (3) opposée au fond de fermeture (5), lorsque la tige filetée est vissée dans le noyau (10) et muni de moyens coopérant avec l'extrémité de l'enveloppe du bouchon (3) pour réaliser le blocage en rotation et/ou en translation du dispositif d'obturation.

2.- Dispositif d'obturation suivant la revendication 1, caractérisé par le fait qu'il est constitué sous la forme d'une vis dont la tête (11b) constitue l'élément de blocage destiné à venir s'engager dans un alésage (7) de l'enveloppe (4) du bouchon, le blocage en rotation et en translation du dispositif d'obturation étant réalisé par des points de soudure (13) de jonction entre la tête de vis (11b) et l'enveloppe (4) du bouchon (3), au niveau de l'alésage (7) de l'enveloppe (4).

3.- Dispositif d'obturation suivant la revendication 1, caractérisé par le fait que l'élément de blocage (21b) comporte une gorge annulaire (23) dans sa partie de jonction avec la tige (21a), une collerette d'appui (22) à son extrémité opposée à la tige filetée (21a) et une bague élastique (25) engagée dans la gorge (23) susceptible de se rétracter par élasticité dans des directions radiales pour son introduction dans un alésage (7) de l'enveloppe (4) du bouchon (3) situé à l'extrémité du bouchon opposée au fond (5), pendant le vissage de la tige filetée (21a) dans l'alésage (10') du noyau expanseur (10) et son expansion diamétrale dans une partie élargie diamétralement (8) de l'alésage (7).

4.- Dispositif d'obturation suivant la revendication 1, caractérisé par le fait que l'élément de blocage (21'b) est séparé de la tige filetée (21'a) par un épaulement sur lequel est mise en appui une bague élastique (25') pouvant être rétractée dans des directions radiales pour permettre l'introduction de l'élément de blocage (21'b) dans un alésage (7') débouchant à l'extrémité de l'enveloppe (4') du bouchon opposée à son fond (5'), pendant le vissage de la tige filetée (21'a) dans l'alésage taraudé (10') du noyau expanseur (10), la bague élastique (25') venant se loger, en fin de vissage de la tige (21'a), dans une partie élargie diamétralement (8') de l'alésage (7') de l'enveloppe (4') du bouchon.

5.- Dispositif d'obturation suivant la revendication 4, caractérisé par le fait que la bague (25') présente la forme d'un tore à section carrée.

6.- Dispositif d'obturation suivant la revendication 1, caractérisé par le fait que l'élément de blocage (31b) est constitué par un élément tubulaire comportant des fentes (33) de direction axiale délimitant des lamelles élastiques (34) déformables dans des directions radiales et comportant des extrémités opposées à la tige filetée (31a) constituées par des talons d'appui en saillie radiale vers l'extérieur, les lamelles élastiques (34) étant serrées de manière à les rapprocher les unes des autres pendant le vissage de la tige (31a) dans le noyau expanseur (10) et relâchées en fin de vissage, afin que les talons d'extrémité des lamelles (34) viennent en position de blocage du dispositif d'obturation, dans une gorge (8) dans l'alésage intérieur de l'enveloppe (4) du bouchon.

7.- Dispositif d'obturation suivant la revendication 1, caractérisé par le fait que l'élément de blocage (41b) est constitué par une virole mince déformable dont le diamètre extérieur est inférieur au diamètre de l'alésage intérieur (7) de l'enveloppe (4) du bouchon à son extrémité opposée au fond de fermeture étanche (5), le blocage en translation du dispositif d'obturation (41) étant réalisé par expansion diamétrale vers l'extérieur de la virole déformable (43), à l'intérieur d'une gorge (8) constituant une partie élargie de l'alésage (7), à l'intérieur de l'enveloppe (4) du bouchon.

8.- Dispositif d'obturation suivant la revendication 1, caractérisé par le fait qu'il présente la forme d'une vis (51), dont la tête (51b) et une partie de la tige filetée (51a) sont traversées par des fentes (53) de direction axiale délimitant quatre branches déformables élastiquement dans des directions radiales, entièrement séparées, sur toute la longueur de la tête (51b) et sur une partie de la longueur de la tige filetée (51a) ainsi qu'une collerette (54) saillante radialement dans la zone de jonction entre la tige filetée (51a) et la tête (51b) et des moyens de préhension (56) des branches déformables de la vis, pour réaliser une rétraction radiale de la tête (51b) pendant le vissage de la tige filetée (51a) dans le noyau expanseur (10), le relâchement des branches élastiques de la vis après vissage dans le noyau expanseur (10) permettant le blocage de cette vis par introduction de la collerette (54) dans une gorge (8) à l'intérieur de l'alésage de l'enveloppe (4) du bouchon (3).

9.- Dispositif d'obturation suivant la revendication 1, caractérisé par le fait qu'il présente la forme d'une vis (61), dont la tête (61b) et une partie de la tige filetée (61a) sont traversées par des fentes (63) de direction axiale délimitant quatre branches déformables élastiquement dans des directions radiales, entièrement séparées, sur toute la longueur de la tête (61b) et sur une partie de la longueur de la tige filetée (61a) ainsi qu'une collerette (64) saillante radialement dans la zone de jonction entre la tige filetée (61a) et la tête (61b) et un moyen d'écartement (66) pouvant être introduit axialement dans un alésage (67) à la partie centrale de la vis (61), entre les branches élastiques de cette vis, la collerette (64) ayant un diamètre extérieur inférieur au diamètre intérieur de l'alésage (7) de l'enveloppe (4) du bouchon dans sa partie opposée au fond (5) peur permettre le vissage de la tige filetée (61a) dans le noyau expanseur (10), le blocage de la vis (61) constituant le dispositif d'obturation étant réalisé par introduction du dispositif d'écartement (66) des branches élastiques de manière à introduire la collerette (64) dans une gorge (8) à diamètre élargi usinée à l'intérieur de l'alésage de l'enveloppe (4) du bouchon.

10.- Dispositif d'obturation suivant la revendication 9, caractérisé par le fait que l'alésage central (67) de la vis (61) constituant le dispositif d'obturation comporte une partie tronconique (67a) et que le dispositif d'écartement (66) présente une surface extérieure de forme tronconique correspondant à la forme de la partie (67a) de l'alésage de la vis (61), l'écar tement des branches élastiques de la vis (61) étant obtenu par poussée axiale sur le dispositif d'écartement (66).

11.- Dispositif d'obturation suivant la revendication 1, caractérisé par le fait que la tige filetée (71a) et l'élément de blocage (71b) comportent un alésage borgne de direction axiale (73) traversant l'élément de blocage (71b) sur toute sa longueur axiale, le fond de l'alésage borgne (73) étant situé au voisinage de l'extrémité de la tige filetée (71a) opposée à l'élément de blocage (71b), que le pas de vis de la tige filetée (71a) est plus petit que le pas de vis de l'alésage taraudé (10') du noyau expanseur (10) et que l'élément de blocage (71b) comporte, à son extrémité opposée à la tige filetée (71a), une collerette (72) en saillie radiale destinée à venir en appui sur l'extrémité de l'enveloppe (4) du bouchon (3), le dispositif d'obturation (71) comportant en outre des moyens (73') pour la fixation d'un outil d'extension axiale de la tige filetée (71a), pendant son vissage dans l'alésage taraudé (10') du noyau expanseur (10).

12.- Dispositif d'obturation suivant la revendication 1, caractérisé par le fait que l'élément de blocage de la tige filetée (81a) comporte :
- une partie d'extrémité (81b) de la tige filetée (81a) sur laquelle est usinée une cavité (83) pour un outil de vissage et de dévissage de la tige filetée (81a) et qui est prolongée axialement par une virole mince déformable (84),
- et un écrou (82) ayant une surface externe filetée qui peut être vissée dans un alésage taraudé (7) de l'enveloppe (4) du bouchon constituant la partie d'extrémité de l'alésage de l'enveloppe (4) du bouchon opposée au fond (5), un alésage interne dont le diamètre est supérieur au diamètre de la partie d'extrémité (81b) de la tige (81a), une collerette d'appui (86) sur l'extrémité de l'enveloppe (4) du bouchon opposée à son fond (5) et au moins un embrèvement de sertissage (85) en saillie radiale vers l'extérieur par rapport à l'alésage interne de l'écrou (82), dans sa partie traversant la collerette (86), les pas de vis de la tige filetée (81a) et de l'écrou (82) étant différents et l'écrou (82) étant vissé dans l'alésage taraudé (7) après vissage de la tige filetée (81a) dans l'alésage taraudé (10') du noyau (10), de manière que la partie d'extrémité (81b) de la tige filetée (81a) soit introduite dans l'alésage interne de l'écrou (82) puis bloquée en rotation par rapport à l'écrou (82) par le repoussage de la virole (84) dans l'embrèvement (85).

13.- Dispositif d'obturation et de retenue selon la revendication 1, caractérisé par le fait que la tige filetée (105, 105') comporte au moins une ouverture transversale (112, 120, 121) perpendiculaire à son axe (111), débouchant de part et d'autre de la tige (105, 105'), dans laquelle est engagée une pièce de freinage (115, 122, 123) destinée à venir en contact par des parties d'extrémité avec les filets du trou taraudé (103') du noyau (103), lors du vissage de la tige filetée (105, 105') dans le noyau (103).

14.- Dispositif suivant la revendication 13, caractérisé par le fait que l'ouverture (112, 120, 121) présente une direction axiale correspondant à un diamètre de la section de la tige (105, 105').

15.- Dispositif suivant l'une quelconque des revendications 13 et 14, caractérisé par le fait que l'ouverture (112, 120, 121) et la pièce de freinage correspondante (115, 122, 123) présentent une section transversale de forme circulaire.

16.- Dispositif suivant l'une quelconque des revendications 13 à 15, caractérisé par le fait que la pièce de freinage (115, 122, 123) est réalisée en un matériau dont la dureté est sensiblement inférieure à la dureté du matériau constituant le noyau (103).

17.- Dispositif suivant l'une quelconque des revendications 13 à 16, caractérisé par le fait que la pièce de freinage (115, 122, 123) a une longueur dans sa direction axiale correspondant à la direction axiale de l'ouverture (112, 120, 121) de la tige (105, 105') supérieure au diamètre en fond de filet de la tige filetée (105, 105').

18.- Dispositif suivant l'une quelconque des revendications 13 à 17, caractérisé par le fait que la tige (105') comporte deux ouvertures (120, 121) successives et espacées dans sa direction axiale dans chacune desquelles est engagée une pièce de freinage correspondante (122, 123).

19.- Dispositif suivant la revendication 18, caractérisé par le fait que la pièce de freinage (122) engagée dans l'ouverture (120) de la tige (105') disposée le plus près de l'extrémité de la tige voisine du fond (102) du bouchon présente une longueur inférieure à la pièce de freinage (123) engagée dans l'ouverture (121) placée le plus près de l'extrémité de la tige (105') solidaire de sa partie élargie (106, 107) engagée pour la fixation de la tige (105') dans l'ouverture de l'enveloppe (101) du bouchon.

FIG.1

FIG.2

FIG.3

FIG.4

FIG.5

FIG.6

FIG.6A

EP 0 404 637 A1

FIG.7

FIG.7 B

FIG.7A

## FIG.8

## FIG.8A

## FIG.9

FIG.10 A

FIG.10

FIG. 11

FIG.12

FIG.11 A

FIG.13

FIG.13A

Office européen
des brevets

**RAPPORT DE RECHERCHE EUROPEENNE**

Numero de la demande

EP 90 40 1624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 436 117 (MARTIN)<br>* En entier * | 1 | F 28 F 11/02 |
| A | FR-A-2 599 463 (WESTINGHOUSE)<br>* En entier * | 1 | |
| A | EP-A-0 044 982 (WESTINGHOUSE)<br>* En entier * | 1 | |
| A | EP-A-0 319 723 (COMBUSTION ENGINEERING)<br>* En entier * | 1 | |

**DOMAINES TECHNIQUES RECHERCHES (Int. Cl.5)**

F 28 F
F 16 L

Le présent rapport a été établi pour toutes les revendications

| Lieu de la recherche | Date d'achèvement de la recherche | Examinateur |
|---|---|---|
| LA HAYE | 25-07-1990 | SMETS E.D.C. |